**Europäisches Patentamt**

**European Patent Office**

**Office européen des brevets**

(19)

(11) Veröffentlichungsnummer: **0 075 690**
**B1**

(12) **EUROPÄISCHE PATENTSCHRIFT**

(45) Veröffentlichungstag der Patentschrift:
**01.06.88**

(51) Int. Cl.⁴: **H 04 N 3/15**, H 04 N 5/243

(21) Anmeldenummer: **82107243.6**

(22) Anmeldetag: **10.08.82**

(54) **Zweidimensionaler Halbleiter-Bildsensor mit Steuerung oder Regelung der Integrationszeit.**

(30) Priorität: **25.09.81 DE 3138294**

(43) Veröffentlichungstag der Anmeldung:
**06.04.83 Patentblatt 83/14**

(45) Bekanntmachung des Hinweises auf die Patenterteilung:
**01.06.88 Patentblatt 88/22**

(84) Benannte Vertragsstaaten:
**BE FR GB IT NL**

(56) Entgegenhaltungen:
**GB - A - 2 008 889**
**US - A - 3 931 463**

(73) Patentinhaber: **Siemens Aktiengesellschaft Berlin und München, Wittelsbacherplatz 2, D-8000 München 2 (DE)**

(72) Erfinder: **Pfleiderer, Hans-Jörg, Dr., Franz-Krinninger-Weg 23, D-8011 Zorneding (DE)**
Erfinder: **Herbst, Heiner, Dr., Anechostrasse 29a, D-8000 München 82 (DE)**

## Beschreibung

Die Erfindung bezieht sich auf einen zweidimensionalen Halbleiter-Bildsensor nach dem Oberbegriff des Anspruchs 1.

Ein Bildsensor dieser Art ist aus der GB-A-2 008 889, vgl. insbesondere Fig. 10 und zugehörigen Text, bekannt. Jede Zeilenleitung dieses Bildsensors ist mit zwei Selektionstransistoren verbunden, die über einen Selektionskreis wechselweise in den leitenden Zustand geschaltet werden können. Dabei werden sämtliche Zeilenleitungen in einem ersten Schaltzustand des Selektionskreises über die ersten Selektionstransistoren mit den Ausgängen des vertikalen Schieberegisters und in einem zweiten Schaltzustand des Selektionskreises über die zweiten Selektionstransistoren mit einer Spannungsquelle verbunden. Dadurch wird erreicht, dass das Gatepotential sämtlicher den Sensorelementen unmittelbar nachgeordneten Auswahltransistoren über die Zeilenleitungen auf einen durch die Spannungsquelle vorgegebenen Wert gelegt wird, bei dem Überschussladungen in den Sensorelementen, die einen «blooming»-Effekt auslösen könnten, über die Ausleseleitung entfernt werden.

Der Erfindung liegt die Aufgabe zugrunde, einen Bildsensor der eingangs genannten Art anzugeben, der hinsichtlich der Integrationszeit der Sensorelemente steuerbar oder regelbar ist. Das wird erfindungsgemäss durch eine Ausbildung des Bildsensors nach dem kennzeichnenden Teil des Anspruchs 1 erreicht.

Der mit der Erfindung erzielbare Vorteil liegt insbesondere darin, dass die Integrationszeit der Sensorelemente innerhalb weiter Grenzen in kleinen Schritten variierbar ist, so dass eine genaue Steuerung bzw. Regelung des Bildsensors erfolgen kann.

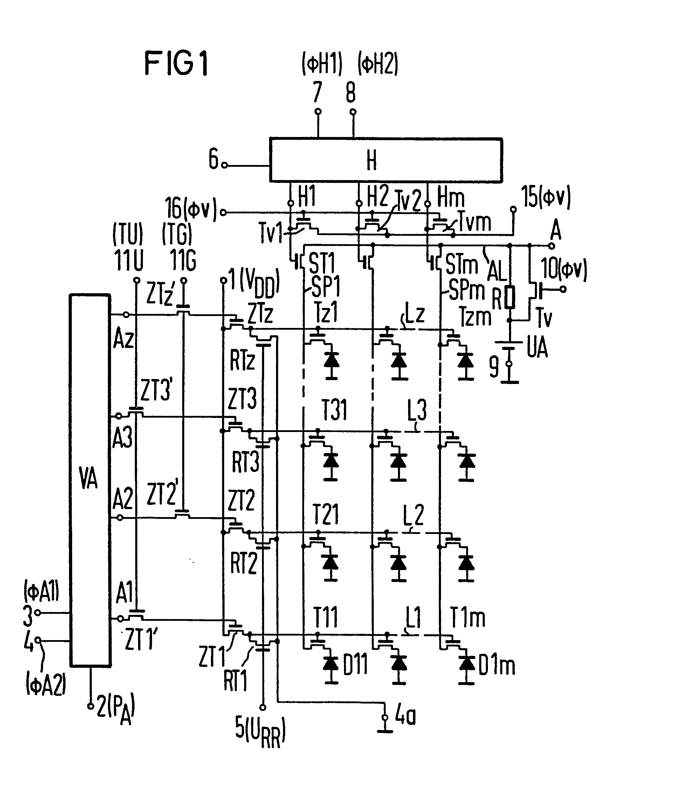

Ein anderer zweidimensionaler Bildsensor, dessen Sensorelemente auf einem Halbleiterkörper in Zeilen und Spalten angeordnet sind, ist aus dem IEEE Journal of Solid-State Circuits, Vol. SC-15, No. 4, August 1980, Seiten 747–752, insbesondere Fig. 1, bekannt.

Die Ansprüche 2 bis 8 sind auf bevorzugte Ausgestaltungen und Weiterbildungen der Erfindung gerichtet.

Die Erfindung wird nachfolgend anhand der Zeichnung näher erläutert. Dabei zeigt:

Fig. 1 das Prinzipschaltbild eines nach der Erfindung ausgebildeten, zweidimensionalen Halbleiter-Bildsensors,

Fig. 2 Spannungs-Zeit-Diagramme zur Erläuterung von Fig. 1,

Fig. 3 eine Steuerschaltung, die die Schaltung nach Fig. 1 ergänzt,

Fig. 4 eine zusätzliche Schaltung, die die Schaltungen nach Fig. 1 und Fig. 3 zu einem geschlossenen Regelkreis ergänzt, und

Fig. 5 eine elektronische Kamera in schematischer Darstellung, in die ein Halbleiter-Bildsensor nach Fig. 1 eingesetzt ist.

In Fig. 1 ist eine monolithisch integrierbare Schaltung mit einem zweidimensionalen Halbleiter-Bildsensor dargestellt, der aus Fotodioden bestehende, in Zeilen und Spalten angeordnete Sensorelemente aufweist. Die in der ersten Zeile angeordneten Fotodioden sind mit D11 bis D1m bezeichnet. In Serie zu diesen sind jeweils die Schaltstrecken von Auswahltransistoren T11 bis T1m vorgesehen, deren Gates mit einer gemeinsamen Zeilenleitung L1 verbunden sind. L1 ist über die Schaltstrecke eines Zeilenauswahltransistors ZT1 mit einem Anschluss 1 verbunden, der mit einer konstanten Spannung $V_{DD}$ beschaltet ist. Das Gate ZT1 ist über die Schaltstrecke eines weiteren Zeilenauswahltransistors ZT1' an einen Parallelausgang A1 eines Vertikal-Schieberegisters VA, das einen Signaleingang 2 und Taktimpulseingänge 3 und 4 aufweist. Weiterhin ist die Zeilenleitung L1 über die Schaltstrecke eines Rücksetztransistors RT1 mit einem auf Bezugspotential liegenden Schaltungspunkt 4a verbunden. Das Gate von RT1 liegt an einem Anschluss 5, der mit einer Spannung $U_{RR}$ beschaltet ist. Die weiteren Fotodioden und Auswahltransistoren des Bildsensors sind in analoger Weise Zeilenleitungen L2 bis Lz zugeordnet, die über Zeilenauswahltransistoren ZT2 bis ZTz ebenfalls an den Anschluss 1 geführt sind. Die Gates von ZT2 bis ZTz sind über die Schaltstrecken von weiteren Zeilenauswahltransistoren ZT2' bis ZTz' an die Parallelausgänge A2 bis Az des Schieberegisters VA gelegt. Weiterhin sind Rücksetztransistoren RT2 bis RTz vorgesehen, die den Zeilenleitungen L2 bis Lz in der bereits beschriebenen Weise zugeordnet und mit ihren Gates an den Anschluss 5 geführt sind. Die Auswahltransistoren T11 bis Tz1, die zu den in einer Spalte befindlichen Fotodioden gehören, sind an eine gemeinsame Spaltenleitung SP1 gelegt, die über einen Spaltenauswahltransistor ST1 mit einer Ausleseleitung AL in Verbindung steht. Das Gate von ST1 ist dabei an den Parallelausgang H1 eines Horizontalschieberegisters H gelegt. In analoger Weise sind die in den weiteren Spalten vorgesehenen Auswahltransistoren, z.B. Tzm, mit Spaltenleitungen, z.B. SPm, und über diesen zugeordnete Spaltenauswahltransistoren, z.B. STm, mit der Ausleseleitung AL verbunden, wobei die Gates der Spaltenauswahltransistoren mit den weiteren Parallelausgängen, z.B. Hm, des Horizontalschieberegisters H beschaltet sind. Letzteres weist einen Signaleingang 6 und Taktimpulseingänge 7, 8 auf. Die Ausleseleitung AL ist über einen Widerstand R und eine in Serie dazu liegende Spannungsquelle UA mit einem auf Bezugspotential liegenden Schaltungspunkt 9 verbunden. Dem Widerstand R ist die Schaltstrecke eines Transistors Tv parallel geschaltet, dessen Gate an einem Anschluss 10 liegt, der mit einer Taktimpulsspannung $\varnothing v$ belegt ist. Der Verbindungspunkt von AL und R stellt gleichzeitig den Sensorausgang A dar.

Die Gates der weiteren Zeilenauswahltransistoren, z.B. ZT1', ZT3' usw., die ungeradzahligen Zeilenleitungen, z.B. L1, L3 usw., zugeordnet sind, liegen an einem gemeinsamen Anschluss 11U. Andererseits liegen die Gates der weiteren, geradzahligen Zeilenleitungen zugeordneten Zeilenauswahltransistoren, z.B. ZT2′ und ZTz′, an einem gemeinsamen Anschluss 11G. Schliesslich sind die Gates der Spaltenauswahltransistoren ST1 bis STm über die Schaltstrecken von Schalttransistoren Tv1 bis Tvm an einen mit der Taktimpulsspannung $\varnothing$v belegten Anschluss 15 geführt, wobei die Gates von Tv1 bis Tvm an einem gemeinsamen Anschluss 16 liegen, der ebenfalls mit der Taktimpulsspannung $\varnothing$v beschaltet ist.

Die Schieberegister VA und H sind beispielsweise als dynamische 2-Phasen-Schieberegister ausgeführt. Dabei wird dem Signaleingang 2 von VA eine Spannung $P_A$ zugeführt, während die Eingänge 3 und 4 mit Taktimpulsspannungen $\varnothing$A1 und $\varnothing$A2 belegt sind. Dem Signaleingang 6 des Schiebergisters H wird eine Spannung $P_H$ zugeführt, den Eingängen 7 und 8 Taktimpulsspannungen $\varnothing$H1 und $\varnothing$H2. Die Anschlüsse 11U und 11G sind jeweils mit Taktimpulsspannungen TU und TG beschaltet.

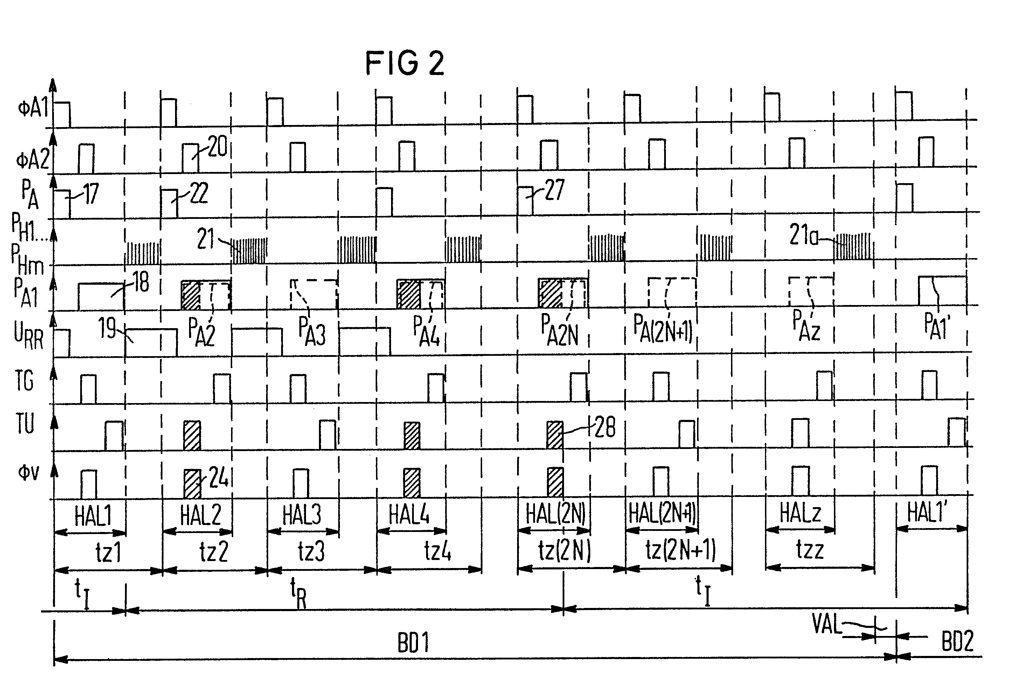

Die obengenannten Spannungen und Taktimpulsspannungen sind in ihrem zeitlichen Verlauf in Fig. 2 dargestellt. Führt man nun dem Signaleingang 2 von VA einen mit einem Taktimpuls $\varnothing$A1 zeitlich zusammenfallenden Spannungsimpuls $P_A$ zu, der in Fig. 2 mit 17 bezeichnet ist und z.B. eine logische 1 darstellt, so erscheint am Ausgang A1 zeitgleich mit dem nächsten Taktimpuls $\varnothing$A2 ein Impuls $P_{A1}$, der mit 18 angedeutet ist. Durch diesen und durch einen gleichzeitig auftretenden Taktimpuls TU wird die Zeilenleitung L1 über den leitend geschalteten Transistor ZT1 mit dem auf $V_{DD}$ liegenden Anschluss 1 verbunden, so dass alle Auswahltransistoren T11 bis T1m leitend geschalten werden und die infolge einer Belichtung der Sensorelemente D11 bis D1m in diesen angesammelten elektrischen Ladungen auf die zugehörigen Spaltenleitungen SP1 bis SPm übertragen werden. In einem sich anschliessenden Zeitintervall treten dann in schneller Folge an den Parallelausgängen H1 bis Hm von H die Impulse $P_{H1}$ bis $P_{Hm}$ auf, die von einem Impuls $P_H$ (einer logischen 1) am Eingang 6 mittels der Taktimpulse $\varnothing$H1 und $\varnothing$H2 abgeleitet werden, so dass die Spaltenauswahltransistoren ST1 bis STm einzeln nacheinander kurzzeitig leitend geschalten werden. Die auf die Spaltenleitungen übertragenen Ladungen werden somit sequentiell über die Ausleseleitung AL dem Widerstand R zugeführt, wobei am Ausgang A entsprechende Spannungen auftreten, die den auf die Zeile D11 bis D1m bezogenen Teil des Sensorsignals $u_s$ bilden. Durch einen Impuls $U_{RR}$, der in Fig. 2 mit 19 bezeichnet ist, wird L1 über den Rücksetztransistor RT1 anschliessend auf Bezugspotential gesetzt, so dass T11 bis T1m wieder sperren. Der Zeitraum vom Beginn des Taktimpulses $\varnothing$A1 bis zum Ende des Taktimpulses TU wird in Fig. 2 als Horizontalaustastlücke HAL1 bezeichnet, der Zeitraum vom Beginn von $\varnothing$A1 bis zum Ende des Impulses $P_{Hm}$ als Zeilendauer tz1.

Mit dem nachfolgenden Taktimpuls $\varnothing$A2, der in Fig. 2 mit 20 bezeichnet ist, erscheint am Ausgang A2 ein Impuls $P_{A2}$, durch den in Verbindung mit einem Taktimpuls TG sämtliche Fotodioden an der Zeilenleitung L2 selektiert werden und ihre Ladung jeweils an die zugeordneten Spaltenleitungen SP1 bis SPm übertragen. Durch eine Folge 21 von Impulsen $P_{H1}$ bis $P_{Hm}$ werden diese Ladungen wieder sequentiell ausgelesen, wobei an A ein weiterer Teil des Sensorsignals $u_s$ auftritt. Dieser Auslesevorgang wiederholt sich zeilenweise, bis schliesslich innerhalb der Zeilendauer tzz ein Impuls $P_{Az}$ und gleichzeitig ein Taktimpuls TG an 11G auftreten und die Ladungen der an Lz liegenden Fotodioden durch eine Folge 21a von Impulsen $P_{H1}$ bis $P_{Hm}$ in Form eines weiteren Teils des Sensorsignals $u_s$ über A ausgelesen werden. An tzz schliesst sich ein als Vertikalaustastlücke VAL bezeichnetes Zeitintervall an, wobei die Zeitdauer von Beginn von HAL1 bis zum Ende vom VAL als Bilddauer BD1 bezeichnet wird. Innerhalb der nächstfolgenden Bilddauer BD2 tritt zunächst wieder eine Horizontalaustastlücke HAL1′ auf, in der die nächste Ladungsübergabe aus den Fotodioden D11 bis D1m an die Spaltenleitungen erfolgt usw.

Nach obigem würden die an L1 liegenden Fotodioden D11 bis D1m eine Integrationszeit haben, die der gesamten Zeitdauer von Beginn des Rücksetzimpulses 19 bis zum Ende des Impulses $P_{A1}′$ entspricht. Wird jedoch dem Eingang 2 von VA innerhalb von HAL2 ein mit dem Taktimpuls $\varnothing$A1 zeitlich zusammenfallender Impuls $P_A$ zugeführt, der z.B. eine logische 1 darstellt und in Fig. 2 mit 22 bezeichnet ist, so tritt mit dem nächstfolgenden Taktimpuls $\varnothing$A2 an A1 ein Impuls $PA_1$ auf, der zusammen mit einem Taktimpuls TU die Zeilenleitung L1 über ZT1 und den Anschluss 1 wieder an $V_{DD}$ legt. Die Ladungen, die sich zwischenzeitlich in D11 bis D1m angesammelt haben, werden hierdurch auf die Spaltenleitungen SP1 bis SPm übertragen. Der Taktimpuls $\varnothing$v, der in Fig. 2 mit 24 bezeichnet ist, bewirkt eine Leitendschaltung von Tv1 bis Tvm, eine Leitendschaltung von ST1 bis STm und eine Überbrückung von R durch Tv, so dass diese Ladungen gleichzeitig dem auf die Spannung von UA rückgesetzten Sensorausgang A zugeführt und somit vernichtet werden, ohne ein Ausgangssignal $u_s$ zu erzeugen. Diese während HAL2 stattfindende Ladungsvernichtung, die als Folge des Impulses 22 auftritt, wird durch eine Schraffur des Impulses 24 sowie des gleichzeitig auftretenden Impulses TU angedeutet. Werden nun im Verlauf der geraden Austastlücken HAL2 bis HAL(2N) insgesamt N-Impulse $P_A$ in VA eingelesen, wobei der letzte mit 27 angedeutet ist, so werden die nach dem Beginn des Impulses 19 in D11 bis D1m optisch angesammelten Ladungen wieder vernichtet, und zwar jeweils während der Horizontalaustastlücken HAL2 bis HAL(2N). Erst nach Beendigung von TU in der Austastlücke HAL(2N) und in dem sich anschliessenden Zeitraum bis zum Ende von $P_{A1}′$ sammeln sich in D11 bis D1m ungestört belichtungsabhängige Ladungen an, die beim Auftreten von PA1′ auf die Spaltenleitungen SP1 bis SPm übertragen und dann anschliessend als Teil eines neuen Sensorsignals $u_s$ ausgelesen werden. Damit ergibt sich für die Fotodioden D11 bis D1m eine Integrationszeit $t_I$ von Ende des in HAL(2N) auftretenden Impulses TU, der in Fig. 2 mit 28 bezeichnet ist, bis zum Ende von PA1'. Die Zeit vom Ende des Impulses 18 bis zum Ende des Impulses 28, in der die Ladungen der genannten Fotodioden wiederholt vernichtet werden, wird als Rücksetzzeit $t_R$ bezeichnet.

Man hat es also in der Hand, die Länge der Integrationszeit für die Fotodioden an der Zeilenleitung L1 durch die Anzahl N der innerhalb von BD1 auftretenden Impulse $P_A$ zu bestimmen bzw. zu steuern. Je grösser N ist, desto grösser wird auch $t_R$ und desto kleiner wird die Integrationszeit $t_I$. Das gleiche gilt wegen der das Schieberegister VA 5 schrittweise durchlaufenden Impulse $P_A$ auch für die Fotodioden an den anderen Zeilenleitungen L2 bis Lz, für die sich jeweils um eine Zeilendauer versetzte, entsprechende Rücksetzzeiten und Integrationszeiten ergeben, die sich jeweils zu einer Zeitdauer ergänzen, die BD1 entspricht. Theoretisch kann also die Intergrationszeit für alle Sensorelemente zwischen Null und der Bilddauer, z.B. BD1, variiert werden, und zwar in Schritten, die einer doppelten Zeilendauer, z.B. tz1 + tz2, entsprechen.

Sollen bei unterschiedlichen Beleuchtungsstärken E auf dem Bildsensor an A jeweils Sensorsignale $u_s$ auftreten, deren mittlere Amplitude konstant ist, so muss die Zahl N in Abhängigkeit von dem jeweiligen Wert von E gewählt werden. Mit der geraden Gesamtzahl der Zeilen z und der Zeilendauer tz folgt die Rücksetzzeit $t_R$ bei Ausserachtlassung der Vertikalaustastlücke VAL zu

$$t_R = (2N-1) \cdot tz \qquad (1)$$

und die Integrationszeit $t_I$ zu

$$t_I = z - (2N-1) \cdot tz . \qquad (2)$$

Die mittlere Amplitude $u_s$ des Bildsensors ist proportional zu E und zu $t_I$, so dass sich ergibt:

$$u_s = c_1 \cdot E \cdot t_I, \qquad (3)$$

wobei $c_1$ eine erste Konstante bedeutet. Damit $u_s$ konstant bleibt, muss gelten:

$$t_I \cdot E = c_2, \qquad (4)$$

wobei $c_2$ eine zweite Konstante darstellt. Aus den Beziehungen (3) und (4) folgt

$$2N - 1 = z - \frac{c_3}{E} \cdot \qquad (5)$$

Hier bedeutet $c_3$ eine dritte Konstante.

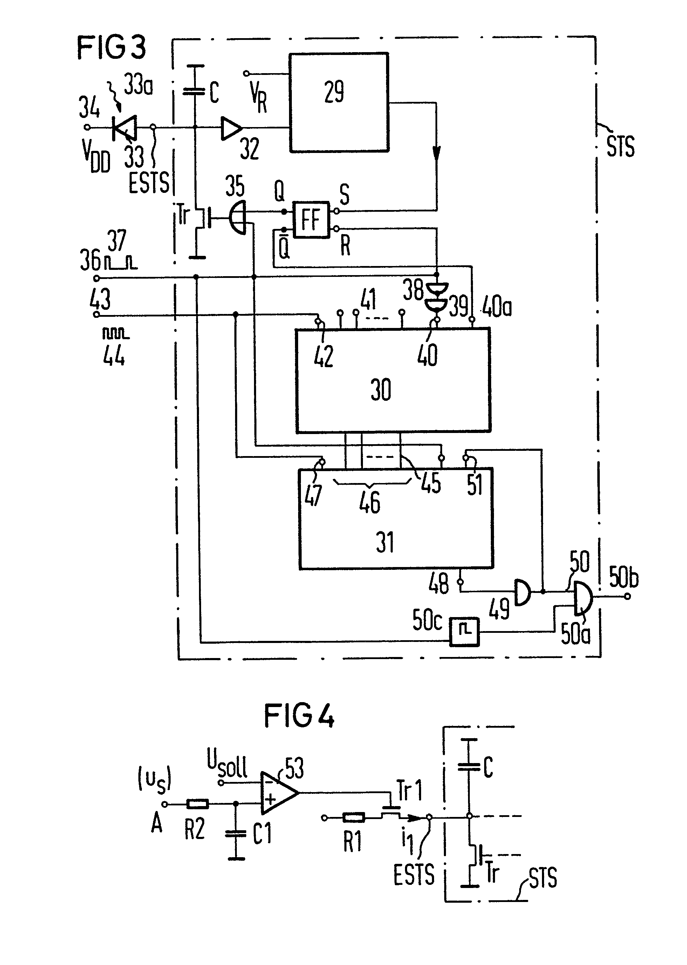

In Fig. 3 ist eine Steueranordnung dargestellt, die die mittlere Amplitude des Sensorsignals $u_s$ unabhängig von der auftretenden Beleuchtungsstärke E auf dem Bildsensor konstant hält. Sie besteht im wesentlichen aus einem Komparator 29, einem Rückwärtszähler 30 und einem Vorwärtszähler 31. Im einzelnen ist der erste Eingang des Komparators 29 mit einer Referenzspannung $V_R$ beschaltet, während sein zweiter Eingang mit dem Ausgang eines Trennverstärkers 32 verbunden ist, dessen Eingang einpolig an einer Fotodiode 33 liegt, die über einen mit der Spannung $V_{DD}$ belegten Anschluss 34 in Sperrichtung vorgespannt ist. Der Verbindungspunkt ESTS des Trennverstärkers 32 und der Fotodiode 33 ist einerseits über eine Kapazität C und andererseits über die Schaltstrecke eines Transistors Tr auf das Bezugspotential der Schaltung gelegt. Der Ausgang des Komparators 29 liegt an dem S-Eingang eines RS-Flipflops FF, dessen Ausgang Q an den ersten Eingang eines ODER-Gatters 35 geführt ist. Der Ausgang von 35 ist mit dem Gate des Transistors Tr beschaltet. Der zweite Eingang von 35 ist mit einem Anschluss 36 verbunden, an dem bildfrequente Impulse 37 auftreten, die zeitlich jeweils in die Vertikalaustastlücken VAL (Fig. 2) fallen. Der Anschluss 36 ist weiterhin mit dem R-Eingang von FF und über die Serienschaltung zweier Inverter 38 und 39 mit dem Setzeingang 40 des Zählers 30 verbunden. Der $\overline{Q}$-Ausgang von FF ist an den Freischalte-(enable-) Eingang 40a von 30 gelegt. Der Zähler 30 ist über einen Eingang 41 auf die Anzahl z der Zeilen des Bildsensors einstellbar. Sein Zähleingang 42 ist mit einem Anschluss 43 verbunden, an dem zeilenfrequente Impulse 44 auftreten, die jeweils in den Horizontalaustastlücken HAL1 usw. liegen. Der Zählerstand des Rückwärtszählers 30 ist über Leitungen 45 auf einen Eingang 46 des Vorwärtszählers 31 übertragbar. Der Zähler 31 weist einen Zähleingang 47 auf, der mit dem Anschluss 43 verbunden ist. Der Ausgang 48 für den Zählerübertrag ist über einen Inverter 49 an den ersten Eingang 50 eines UND-Gatters 50a geführt, dessen Ausgang 50b den Ausgang der Steuerschaltung STS darstellt. Der Ausgang von 49 ist mit dem Freischalteeingang 51 des Vorwärts-Zählers 31 verbunden. Der zweite Eingang von 50a ist mit einem Taktimpulsgenerator 50c verbunden, der über 36 durch die Impulse 37 getriggert wird, so dass er die Taktimpulse PA, beginnend mit dem Impuls 22, liefert, wobei diese Impulse in der aus Fig. 2 entnehmbaren Weise jeweils zu Beginn der Austastlücken HAL2, HAL4 usw. liegen.

Die Kapazität C wird in jeder Vertikaltastlücke VAL durch einen Impuls 37, der den Transistor Tr über 35 leitend schaltet, auf Bezugspotential rückgesetzt. Durch eine Belichtung der Fotodiode 33 mit Lichtstrahlen 33a, die auch den Bildsensor belichten, fliesst ein der Beleuchtungsstärke E auf der Fotodiode proportionaler Strom i, der C auflädt, so dass die Spannung $V_C$ an C ansteigt. Erreicht die Spannung $V_C$, die dem unteren Eingang von 29 zugeführt wird, den Wert von $V_R$, so wird der Ausgang des Komparator 29 von einer logischen 0 auf eine logische 1 umgeschaltet. Die Zeit $t_u$ vom Rücksetzen von C, d.h. vom Auftreten eines Impulses 37, bis zum Umschalten von 29 ergibt sich aus

$$t_u = c_4 \cdot \frac{C \cdot V_R}{E} = \frac{c_5}{E} , \qquad (6)$$

wobei $c_4$ und $c_5$ weitere Konstanten darstellen. Ein Vergleich von (4) und (6) zeigt, dass sowohl $t_u$ als

auch $t_i$ umgekehrt proportional zur Beleuchtungsstärke E sind. Sobald der Komparator 29 eine logische 1 abgibt, wird FF gesetzt, wobei Q von einer logischen 0 auf eine logische 1 umgeschaltet wird, die den Transistor Tr über 35 leitend schaltet und damit die Kapazität entlädt. Gleichzeitig wird der Freischalteeingang 40a von 30, der bis dahin mit einer logischen 1 belegt war, auf 0 umgeschaltet, so dass der Zähler 30, der durch den Impuls 37 auf die eingestellte Zahl z gesetzt worden war und danach die ankommenden zellenfrequenten Impulse 44 gezählt hatte, angehalten wird. Der hierbei in 30 erreichte Zählerstand $Z_{30}$ entspricht dem Ausdruck

$$Z_{30} = z - \frac{t_i}{tz} = z - \frac{z - (2N-1) \cdot tz}{tz} = 2N - 1 \qquad (7)$$

und somit der Rücksetzzeit $z_t$. Der Zählstand $Z_{30}$ wird zu Beginn der nächsten Vertikalaustastlücke VAL durch einen Impuls 37, der dem Setzeingang 31a des Vorwärtszählers 31 zugeführt wird, an den Eingang 46 desselben übernommen. Der Zähler 31 zählt dann von Null beginnend die ankommenden Zeilenfrequenzimpulse 44, bis er den übernommenen Zählerstand $Z_{30}$ erreicht hat. Während dieses Zählvorgangs liegt der den Übertrag von 31 abgebende Ausgang 48 auf einer logischen 0, so dass das UND-Gatter 50a geöffnet ist und die von 50c gelieferten Taktimpulse $P_A$, beginnend mit dem Impuls 22, am Ausgang 50b von STS auftreten. Erreicht der Zähler 31 den ihm über 46 eingegebenen Zählerstand $Z_{30}$, so wird über 48 eine logische 1 abgegeben, die nach einer Investierung in 49 einerseits das Gatter 50a sperrt und andererseits den Zähler 31 über den Eingang 51 selbst blockiert. Die Dauer des zuletzt beschriebenen Zählvorgangs im Zähler 31 entspricht der Rücksetzzeit $t_R$. In der nächsten Vertikalaustastlücke VAL wird dann der Zähler 31 durch einen Impuls 37 wieder auf 0 zurückgesetzt. Unabhängig vom Zählvorgang des Zählers 31 läuft auch der Rückwärtszähler 30 und bestimmt bereits die Rücksetzzeit für die nächste Bilddauer BD.

Durch eine in Fig. 4 dargestellte Abänderung der Schaltung nach Fig. 3 kann eine Regelung der mittleren Amplitude des Sensorsignals $u_s$ auf einen Sollwert $U_{soll}$ durchgeführt werden. Zu diesem Zweck wird der Eingang ESTS der Steuerschaltung STS (Fig. 3) über die Source-Drain-Strecke eines Transistors Tr1 und einen hochohmigen Widerstand R1 mit einem Anschluss 52 verbunden, der mit der Spannung $V_{DD}$ beschaltet ist. Der Widerstand R1 bewirkt dabei, dass der Transistor TR1 die Funktion einer steuerbaren Stromquelle mit hohem Innenwiderstand hat. Das Gate von Tr1 ist mit dem Ausgang eines Differenzverstärkers 53 verbunden, dessen negativer Eingang mit der Spannung $U_{soll}$ belegt ist und dessen positiver Eingang über einen Widerstand R2 mit dem Sensorausgang A (Fig. 1) verbunden ist. Weiterhin ist der positive Eingang von 53 über eine Kapazität C1 an das Bezugspotential der Schaltung gelegt.

In Fig. 4 wird das Sensorsignal $u_s$ mittels des aus C1 und R2 gebildeten Tiefpasses über die Dauer mehrerer Bilder gemittelt. Das gemittelte Signal wird im Differenzverstärker 53 mit $U_{soll}$ verglichen, wobei die Differenz der Eingangssignale an 53 den Strom $i_1$ des als Konstantstromquelle geschalteten Transistors Tr1 steuert. Dabei ersetzt $i_1$ den Strom $i$ der Fotodiode von Fig. 3. Der weitere Funktionsablauf in der Steuerschaltung STS wurde bereits anhand von Fig. 3 beschrieben. Mit der Anordnung nach Fig. 4 wird erreicht, dass der gemittelte Wert von $u_s$ bisd auf eine Regelabweichung dem Wert $U_{soll}$ angeglichen ist, so dass eine sehr genaue Kontrolle des Sensorsignals erfolgt.

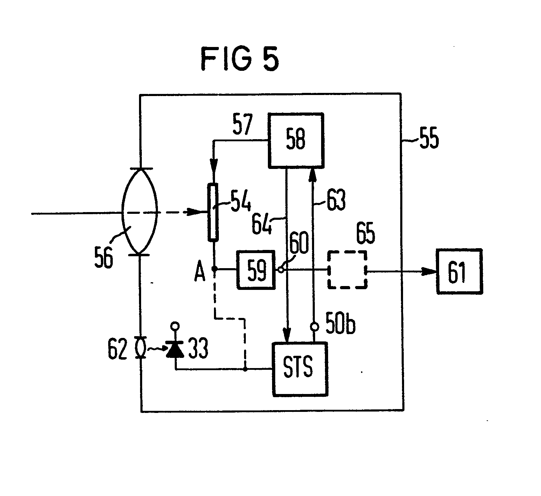

Die Anwendung eines nach der Erfindung ausgebildeten Halbleiter-Bildsensors bei einer elektronischen Kamera ist in Fig. 5 schematisch dargestellt. Ein Bildsensor gemäss Fig. 1 ist dabei in Form einer monolithisch integrierten Halbleiteranordnung 54 in der Bildebene einer elektronischen Kamera 55 angeordnet, die mit einem Objektiv 56 ausgestattet ist. Dem Bildsensor werden die benötigten Spannungen und Taktimpulsspannungen über Leitungen 57 von einer Ablaufsteuerung 58 zugeführt, wobei die Sensorsignale über den Ausgang A des Bildsensors einer Schaltung 59 mitgeteilt werden, in der sie zu einem Videosignal verarbeitet werden, das mit zeilen- und bildfrequenten Impulsen versehen ist. Das Videosignal gelangt über einen Ausgang 60 zu einem Videorekorder oder einem Fernsehgerät 61. Der Steuerschaltung STS kann dabei gemäss Fig. 3 eine Fotodiode 33 vorgeschaltet sein, die durch eine Hilfsoptik 62 beleuchtet wird. Andererseits kann der Eingang ESTS in der anhand von Fig. 4 erläuterten Weise mit dem Ausgang A verbunden sein, was in Fig. 5 durch eine gestrichelte Linie angedeutet ist.

Die am Ausgang 50b auftretenden Impulse $P_A$ werden über eine Leitung 63 der Ablaufsteuerung 58 und über diese dem Bildsensor 54 zugeführt. Andererseits werden die zum Betrieb von STS benötigten Impulse 37 und 44 in der Ablaufsteuerung 58 erzeugt und über eine Leitung 64 zur Steuerschaltung STS übertragen.

Bei der elektronischen Kamera 55 kann es sich um eine Laufbild- oder um eine Festbildkamera handeln, wobei im letzteren Fall und bei der Einrichtung eines Regelkreises für die Sensorsignale $u_s$ zweckmässigerweise ein Zeitschalter 65 dem Ausgang 60 nachgeordnet ist, der die Weitergabe der Videosignale erst dann ermöglicht, wenn die sich bei der Ausrichtung der Kamera auf ein bestimmtes Objekt zunächst ergebenden Regelschwingungen abgeklungen sind. Die Steuerung oder Regelung der Integrationszeit der Sensorelemente des Bildsensors 54 ersetzt in Fig. 5 die bisher übliche Belichtungssteuerung bei elektronischen Kameras, die durch eine mechanische oder elektromechanische Blendenbetätigung und/oder durch eine Belichtungszeitsteuerung erfolgt.

Die Bilddauer, z.B. BD1, kann zweckmässigerweise einer Fernsehnorm gemäss 20 ms betragen, wobei dann die Horizontalaustastlücken, z.B. HAL1, 12 µs, die Zeilendauer, z.B. tz1, 64 µs und die Vertikalaustastlücke, z.B. VAL1, etwa 1,2 ms betragen.

Als Sensorelemente können anstelle der bisher beschriebenen Fotodioden D11 usw. auch CID-Sensorelemente verwendet werden, die jeweils aus einem Paar nebeneinanderliegender MIS-Kondensatoren bestehen, wobei die äussere Elektrode des einen Kondensators einen solchen Paares an die zugeordnete Zeilenleitung und die äussere Elektrode des anderen Kondensators an die zugeordnete Spaltenleitung geschaltet sind. Ein Bildsensor mit CID-Sensorelementen ist beispielsweise in dem IEEE Journal of Solid States Circuits, Vol. SC-11, Februar 1976, Seiten 121 bis 128, insbesondere Figuren 1 und 2, beschrieben. Zur Vernichtung der während der Rücksetzzeit $t_R$ in den Sensorelementen angesammelten Ladungen sind hierbei sowohl die Spaltenleitungen als auch gleichzeitig die jeweils betroffenen Zeilenleitungen auf das Bezugspotential der Schaltung zurückzusetzen.

**Patentansprüche**

1. Zweidimensionaler Halbleiter-Bildsensor mit auf einem dotierten Halbleiterkörper in Zeilen und Spalten angeordneten Sensorelementen (D11 ... D1m), bei dem Zeilenleitungen (L1 ... Lz), die über zugeordnete Parallelausgänge (A1 ... Az) eines Vertikal-Schieberegisters (VA) ansteuerbar sind, zur Selektion der Sensorelemente dienen, bei dem die Ausgänge der Sensorelemente im selektierten Zustand mit Spaltenleitungen (SP1 ... SPm) verbunden sind, bei dem ein Sensorausgang (A) zum sequentiellen Auslesen der jeweils parallel auf die Spaltenleitungen übertragenen Signale der Sensorelemente (D11 ... D1m) vorgesehen ist und bei dem alle Spaltenleitungen (SP1 ... SPm) an einen mit einer konstanten Spannung belegten Schaltungspunkt (A) gleichzeitig anschaltbar sind, dadurch gekennzeichnet, dass die Zeilenleitungen (L1 ... Lz) über erste Zeilenauswahltransistoren (ZT1 ... ZTz) mit einem auf einer konstanten Spannung liegenden Anschluss (1) verbunden sind, dass die Steueranschlüsse der ersten Zeilenauswahltransistoren (ZT1 ... ZTz) über zweite Zeilenauswahltransistoren (ZT1' ... ZTz') mit den Parallelausgängen (A1 ... Az) des Vertikal-Schieberegisters (VA) verbunden sind, wobei die zweiten Zeilenauswahltransistoren ZT1' ... ZTz') derart ansteuerbar sind, dass die ersten Zeilenauswahltransistoren (ZT1, ZT3 ... ) aller ungeraden Zeilen (L1, L3 ... ) in alternierender Folge mit den ersten Zeilenauswahltransistoren (ZT2, ZT4 ... ) aller geraden Zeilen (L2, L4 ... ) mit ihren Steueranschlüssen an die zugeordneten Parallelausgänge (A1 ... Az) des Vertikal-Schieberegisters angeschaltet werden.

2. Zweidimensionaler Halbleiter-Bildsensor nach Anspruch 1, dadurch gekennzeichnet, dass die Zeilenleitungen (L1 ... Lz) über Rücksetztransistoren (RT1 ... RTz) mit einem auf Bezugspotential liegenden Schaltungspunkt (4a) verbunden sind.

3. Zweidimensionaler Halbleiter-Bildsensor nach Anspruch 1 oder 2, dadurch gekennzeichnet, dass die Spaltenleitungen über Spaltenauswahltransistoren (ST1 ... STm) mit einer zum Sensorausgang (A) führenden Ausleseleitung (AL) verbunden sind, wobei die Steueranschlüsse der Spaltenauswahltransistoren (ST1 ... STm) mit Parallelausgängen (H1 ... Hm) eines Horizontal-Schieberegisters (H) verbunden sind.

4. Zweidimensionaler Halbleiter-Bildsensor nach Anspruch 3, dadurch gekennzeichnet, dass die Steueranschlüsse der Spaltenauswahltransistoren (ST1 ... STm) über die Schaltstrecken von Schalttransistoren (Tr1 ... Trm) mit einem mit einer Taktimpulsspannung ($\varnothing$v) beschalteten Anschluss (15) verbunden sind und dass die Steueranschlüsse der Schalttransistoren (Tr1 ... Trm) an einen weiteren mit der Taktimpulsspannung ($\varnothing$v) beschalteten Anschluss (16) geführt sind.

5. Zweidimensionaler Halbleiter-Bildsensor nach einem der Ansprüche 1 bis 4, dadurch gekennzeichnet, dass der Sensorausgang (A) über einen Widerstand (R) an eine Spannungsquelle (KA) geschaltet ist.

6. Zweidimensionaler Halbleiter-Bildsensor nach Anspruch 5, dadurch gekennzeichnet, dass der Widerstand (R) durch die Schaltstrecke eines Transistors überbrückt ist, der mit der Taktimpulsspannung ($\varnothing$v) angesteuert wird.

7. Zweidimensionaler Halbleiter-Bildsensor nach einem der Ansprüche 1 bis 6, dadurch gekennzeichnet, dass ein einem fotoelektrischen Wandler (33), insbesondere einer Fotodiode, nachgeschalteter Kondensator (C) an dem ersten Eingang eines Komparators (29) liegt, dessen zweiter Eingang mit einer Referenzspannung ($V_R$) beschaltet ist, dass der Ausgang des Komparators (29) über ein Flipflop (FF) mit einem Freischalteeingang (40a) eines Rückwärtszählers (30) verbunden ist, der auf die Gesamtzahl z der Zeilen des Bildsensors einstellbar ist, dass ein Vorwärtszähler (31) vorgesehen ist, auf den der Zählerstand des Rückwärtszählers übertragbar ist, dass beide Zähler (30, 31) Zählereingänge (42, 47) für zeilenfrequente Taktimpulse (44) aufweisen, dass der Ausgang (48) des Vorwärtszählers (31) für einen Übertrag über einen Inverter (49) an den ersten Eingang (50) eines UND-Gatters (50a) geführt ist, dessen zweiter Eingang mit einem Taktimpulsgenerator (50c) beschaltet ist und dass der Ausgang (50b) des UND-Gatters (50a) mit einem Signaleingang des Vertikal-Schieberegisters (VA) beschaltet ist.

8. Zweidimensionaler Halbleiter-Bildsensor nach Anspruch 7, dadurch gekennzeichnet, dass der Sensorausgang (A) über ein RC-Glied (R2, C1) mit dem einen Eingang eines Differenzverstärkers (53) verbunden ist, dessen zweitem Eingang eine Spannung ($U_{soll}$) zugeführt wird, die einem Sollwert des mittleren Sensorsignals entspricht, und dass dem Differenzverstärker (53) eine durch dessen Ausgangsspannung steuerbare Stromquelle mit grossem Innenwiderstand (Tr1) nachgeschaltet ist, die anstelle des fotoelektrischen Wandlers (33) den Kondensator (C) am Eingang des Komparators (29) auflädt.

9. Verfahren zum Betrieb eines zweidimensionalen Halbleiter-Bildsensors, insbesondere nach einem der vorhergehenden Ansprüche, dadurch gekennzeichnet, dass jede der ungeraden (geraden) Zeilen (L1) von Sensorelementen (D11 ... D1m) nach jeder Selektion, die zum Zwecke des Übertragens der optisch gebildeten Signale ihrer einzelnen Sensorelemente auf die Spaltenleitungen (SP1 ... SPm) und für eine nachfolgende sequentielle Auslesung vorgenommen wird, innerhalb der Zeiträume, die jeweils für das Übertragen der Signale der Sensorelemente der nächstfolgenden N geraden (ungeraden) Zeilen (L2 ... L2N) auf die Spaltenleitungen (SP1 ... SPm) vorgesehen sind, erneut selektiert wird, wobei diese Selektionen jeweils zeitversetzt gegen die in diesen Zeiträumen erfolgenden Übertragungen der Signale der Sensorelemente der N geraden (ungeraden) Zeilen (L2 ... L2N) vorgenommen werden, und dass die letztgenannten Selektionen zum Zwecke des Auslesens und der Beseitigung der in den Sensorelementen der betrachteten ungeraden (geraden) Zeile (L1) zwischenzeitlich angesammelten optisch erzeugten Ladungen vorgenommen werden, wobei die für die nächstfolgende Auslesung der betrachteten Zeile (L1) massgebliche Integrationszeit ($t_i$) erst nach der N'ten Beseitigung der zwischenzeitlich optisch erzeugten Ladungen beginnt.

10. Verfahren nach Anspruch 9, dadurch gekennzeichnet, dass die zur Beseitigung der zwischenzeitlich optisch erzeugten Ladungen erforderlichen Selektionen der Zeilenleitungen über die Parallelzugänge des Vertikal-Schieberegisters vorgenommen werden, dessen Signaleingang zu diesem Zweck mit einer Folge von N Impulsen beaufschlagt wird, die jeweils einen gegenseitigen zeitlichen Abstand aufweisen, der der doppelten Periodendauer der dem Vertikal-Schieberegister zugeführten Taktimpulse entspricht.

11. Verfahren nach Anspruch 9, dadurch gekennzeichnet, dass die Anzahl N der zur Ladungsbeseitigung dienenden Selektionen in Abhängigkeit von der Beleuchtungsstärke auf dem zweidimensionalen Bildsensor ausgewählt wird, und zwar derart, dass die mittlere Amplitude des Sensorsignals konstant bleibt.

12. Verfahren nach Anspruch 9, dadurch gekennzeichnet, dass das Sensorsignal gemittelt wird und die Abweichung des gemittelten Sensorsignals von einem vorgegebenen Sollwert dazu benutzt wird, die Anzahl N der zur Ladungsbeseitigung dienenden Selektionen so auszuwählen, dass die genannte Abweichung möglichst klein ist.

13. Verwendung des zweidimensionalen Bildsensors nach einem der Ansprüche 1 bis 8 zur elektronischen Auswertung einer auf die Bildebene einer elektronischen Kamera projizierten Abbildung, wobei das von der Abbildung abgeleitete Sensorsignal zu einem Videosignal weiterverarbeitet wird.

## Claims

1. A two-dimensional semiconductor image sensor comprising sensor elements (D11 ... D1m) which are arranged in rows and columns on a doped semiconductor body, wherein row lines (L1 ... Lz), which can be driven via assigned parallel outputs (A1 ... Az) of a vertical shift register (VA), serve to select the sensor elements, where the outputs of the sensor elements are connected, in the selected state, to column lines (SP1 ... SPm), where a sensor output (A) is provided for the sequential read-out of the signals of the sensor elements (D11 ... D1m) in each case transmitted to the column lines, and where all the column lines (SP1 ... SPm) can be simultaneously connected to a circuit point (A) connected to a constant voltage, characterised in that the row lines (L1 ... Lz) are connected via first row selection transistors (ZT1 ... ZTz) to a terminal (1) which carries a constant voltage, that the control terminals of the first row selection transistors (ZT1 ... ZTz) are connected via second row selection transistors (ZT1' ... ZTz') to the parallel outputs (A1 ... Az) of the vertical shift register (VA), where the second row selection transistors (ZT1' ... ZTz') can be driven in such manner that the first row selection transistors (ZT1, ZT3 ... ) of all the odd rows (L1, L3 ... ) are connected by their control terminals to the assigned parallel outputs (A1 ... Az) of the vertical shift register in alternating sequence with the first row selection transistors (ZT2, ZT4 ... ) of all the even rows (L2, L4 ... ).

2. A two-dimensional semiconductor image sensor as claimed in Claim 1, characterised in that the row lines (L1 ... Lz) are connected via resetting transistors (RT1 ... RTz) to a circuit point (4a) which is connected to reference potential.

3. A two-dimensional semiconductor image sensor as claimed in Claim 1 or 2, characterised in that the column lines are connected via column selection transistors (ST1 ... STm) to a read-out line (AL) which leads to the sensor output (A), where the control terminals of the column selection transistors (ST1 ... STm) are connected to parallel outputs (H1 ... Hm) of a horizontal shift register (H).

4. A two-dimensional semiconductor image sensor as claimed in Claim 3, characterised in that the control terminals of the column selection transistors (ST1 ... STm) are connected via the switching paths of switching transistors (Tr1 ... Trm) to a terminal (15) which is connected to a clock pulse voltage ($\emptyset$v), and that the control terminals of the switching transistors (Tr1 ... Trm) lead to a further terminal (16) which is connected to the clock pulse voltage ($\emptyset$v).

5. A two-dimensional semiconductor image sensor as claimed in one of Claims 1 to 4, characterised in that the sensor output (A) is connected via a resistor (R) to a voltage source (KA).

6. A two-dimensional semiconductor image sensor as claimed in Claim 5, characterised in that the resistor (R) is bridged by the switching path of a transistor which is driven by the clock pulse voltage ($\emptyset$v).

7. A two-dimensional semiconductor image sensor as claimed in one of Claims 1 to 6, characterised in that a capacitor (C) which is connected to the output of a photo-electric transducer (33), in particular a photo-diode, is connected to the first input of a comparator (29) whose second input is connected to a reference voltage ($V_R$), that the output of the comparator (29) is connected via a flip-flop (FF) to an enable-input (40a) of a backwards counter (30) which can be set at the total number z of the rows of the image sensor, that a forwards counter (31) is provided to which the count of the backwards counter can be transferred, that the two counters (30, 31) are provided with counter inputs (42, 47) for line-frequency clock pulses (44), that the output (48) of the forwards counter (31) for a carry leads via an inverter (49) to the first input (50) of an AND-gate (50a) whose second input is connected to a clock pulse generator (50c), and that the output (50b) of the AND-gate (50a) is connected to a signal input of the vertical shift register (VA).

8. A two-dimensional semiconductor image sensor as claimed in Claim 7, characterised in that the sensor output (A) is connected via an RC-element (R2, C1) to the first input of a differential amplifier (53) whose second input is supplied with a voltage ($U_{soll}$) which corresponds to a theoretical value of the mean sensor signal, and that the differential amplifier (53) is connected at its output to a current source which has a high internal impedance (Tr1), can be controlled by the output voltage of said differential amplifier, and which charges the capacitor (C) at the input of the comparator (29) in place of the photo-electric transducer (33).

9. A method of operating a two-dimensional semiconductor image sensor, in particular as claimed in one of the preceding Claims, characterised in that the odd (even) rows (L1) of sensor elements (D11 . . . D1m) – following each selection which takes place in order to transfer the optically-formed signals of the individual sensor elements to the column lines (SP1 . . . SPm) and for a subsequent sequential read-out – is reselected within the time intervals which are provided for the transfer of the signals of the sensor elements of the following N even (odd) rows (L2 . . . L2N) to the column lines (SP1 . . . SPm), where these selections take place with a time delay in comparison to the transfer procedures, carried out during the time intervals, of the signals of the N even (odd) rows (L2 . . . L2N), and that the last-mentioned selections are carried out for the read-out and the elimination of the optically-generated charges which have meanwhile accumulated in the sensor elements of the respective odd (even) row (L1), where the integration time ($t_i$), which governs the following read-out of the respective row (L1), commences only following the Nth elimination of the charges which have meanwhile been optically-generated.

10. A method as claimed in Claim 9, characterised in that the selections of the row-lines, which are necessary in order to eliminate the charges which have meanwhile been optically-generated, are carried out via the parallel outputs of the vertical shift register whose signal is supplied for this purpose with a sequence of N pulses which are mutually spaced by an interval of time which corresponds to double the period duration of the clock pulses supplied to the vertical shift register.

11. A method as claimed in Claim 9, characterised in that the number N of the selections which serve to eliminate the charges is selected in dependence upon the luminance on the two-dimensional image sensor in such manner that the mean amplitude of the sensor signal remains constant.

12. A method as claimed in Claim 9, characterised in that the sensor signal is averaged and the deviation between the averaged sensor signal and a predetermined theoretical value is used to select the number N of the selections, which serve to eliminate the charges, to be such that the aforesaid deviation is as small as possible.

13. Use of the two-dimensional image sensors as claimed in one of Claims 1 to 8, for the electronic analysis of an image projected onto the image plane of an electronic camera, where the sensor signal derived from the image is further processed to form a video-signal.

**Revendications**

1. Détecteur d'images bidimensionnel à semiconducteurs comportant des éléments détecteurs (D11 . . . D1m) disposés suivant des lignes et des colonnes sur un corps semiconducteur dopé et dans lequel les conducteurs de lignes (L1 . . . Ln), qui peuvent être commandés par l'intermédiaire de sorties parallèles associées (A1 . . . Az) d'un registre à décalage vertical (VA), sont utilisés pour sélectionner des éléments détecteurs, et dans lequel les sorties des éléments détecteurs à l'état sélectionné sont reliés à des conducteurs de colonnes (SP1 . . . SPm), et dans lequel une sortie (A) du détecteur est prévue pour la lecture séquentielle des signaux des éléments détecteurs (D11 . . . D1m) transmis respectivement en parallèles aux conducteurs de colonnes, et dans lequel tous les conducteurs de colonnes (SP1 . . . SPm) peuvent être raccordés simultanément à un point (A) du circuit, placé à une tension constante, caractérisé par le fait que les conducteurs de lignes (L1 . . . Ln) sont reliés par l'intermédiaire de premiers transistors (ZT1 . . . ZTz) de sélection de lignes à une borne (1) placée à une tension constante, les bornes de commande des premiers transistors (ZT1 . . . ZTz) de sélection de lignes sont reliées par l'intermédiaire de seconds transistors (ZT1 . . . ZTz') de sélection de lignes aux sorties en parallèle (A1 . . . Az) du registre à décalage vertical (VA), les seconds transistors (ZT1' . . . ZTz') de sélection de lignes pouvant être commandés de telle sorte que les premiers transistors (ZT1, ZT3 . . . ) de sélection de lignes de toutes les lignes impaires (L1, L3 . . . ) sont raccordés selon une séquence alternée avec les premiers transistors (ZT2, ZT4 . . . ) de sélection de lignes de toutes les lignes paires (L2, L4 . . . ), par leurs bornes de commande aux sorties en parallèle associées (A1 . . . Az) du registre à décalage vertical.

2. Détecteur d'images bidimensionnel à semiconducteurs suivant la revendication 1, caractérisé par le fait que les conducteurs de lignes (L1 . . . Lz) sont reliés par l'intermédiaire de transistors (RT1 . . . RTz) de remise à l'état initial, à un point (4a) du circuit, placé au potentiel de référence.

3. Détecteur d'images bidirectionnel à semiconducteurs suivant la revendication 1 ou 2, caractérisé par le fait que les conducteurs de colonnes sont reliés par l'intermédiaire de transistors (ST1 . . . STm) de sélection de colonnes, à un conducteur de lecture (AL) raccordé à la sortie (A) du détecteur, les bornes de commande des transistors (ST1 . . . STm) de sélection de colonnes étant reliées à des sorties en parallèle (H1 . . . Hm) d'un registre à décalage horizontal (H).

4. Détecteur d'images bidimensionnel à semiconducteurs suivant la revendication 3, caractérisé par le fait que les bornes de commande des transistors (ST1 . . . STm) de sélection de colonnes sont reliées par l'intermédiaire de voies de commutation de transistors de commutation (Tr1 . . . Trm) à une borne (15) recevant une tension impulsionnelle de cadence ($\emptyset$v), et que les bornes de commande des transistors de commutation (Tr1 . . . Trm) sont raccordées à une autre borne (14) recevant la tension impulsionnelle de cadence ($\emptyset$v).

5. Détecteur d'images bidimensionnels à semiconducteurs suivant l'une des revendications 1 à 4, caractérisé par le fait que la sortie (A) du détecteur est raccordée par l'intermédiaire d'une résistance (R) à une source de tension (KA).

6. Détecteur d'images bidimensionnel à semiconducteurs suivant la revendication 5, caractérisé par le fait que la résistance (R) est shuntée par la voie de commutation d'un transistor, qui est commandé par la tension impulsionnelle de cadence ($\emptyset$v).

7. Détecteur d'images bidimensionnel à semiconducteurs suivant l'une des revendications 1 à 6, caractérisé par le fait qu'un condensateur (C) monté en aval d'un convertisseur photoélectrique (33), notamment une photodiode, est raccordé à la première entrée d'un comparateur (29), dont la seconde entrée est portée à une tension de référence (V$_R$), que la sortie du comparateur (29) est raccordée par l'intermédiaire d'une bascule bistable (FF) à une entrée de déblocage (40a) d'un compteur régressif (30) qui peut être réglé sur le nombre total z des lignes du détecteur d'images, qu'il est prévu un compteur progressif (31), auquel peut être transmis l'état de comptage du compteur régressif, et que les deux compteurs (30, 31) comportent des entrées (42, 47) pour les impulsions de cadence (44) possédant la fréquence des lignes, que la sortie (48) du compteur progressif (31) est raccordée pour une transmission, par l'intermédiaire d'un inverseur (49) à la première entrée (50) d'une porte ET (50a), dont la seconde entrée est raccordée à un générateur d'impulsions de cadence (50c), et que la sortie (50b) de la porte ET (50a) est raccordée à une entrée de transmission de signaux du registre à décalage vertical (VA).

8. Détecteur d'images bidimensionnel à semiconducteurs suivant la revendication 7, caractérisé par le fait que la sortie (A) du détecteur est reliée par l'intermédiaire d'un circuit RC (R2, C1) à une première entrée d'un amplificateur differentiel (53), à la seconde entrée duquel est envoyée une tension (U$_{consigne}$), qui correspond à une valeur de consigne du signal moyen du détecteur, et qu'en aval de l'amplicateur différentiel (53) est branchée une source de courant, pouvant être commandée par la tension de sortie de son amplificateur, qui possède une résistance interne (Tr1) élevée et qui charge, à la place du convertisseur photoélectrique (33), le condensateur (C) situé à l'entrée du comparateur (29).

9. Procédé pour la mise en œuvre d'un détecteur d'images bidimensionnel à semiconducteurs, notamment suivant l'une des revendications précédentes, caractérisé par le fait que chacune des lignes impaires (paires) (L) d'éléments détecteurs (D11 . . . D1m) est à nouveau sélectionnée, après chaque sélection qui est exécutée pour la transmission des signaux formés optiquement de leurs éléments détecteurs individuels aux conducteurs de colonnes (SP1 . . . SPm) et pour une lecture séquentielle ultérieure, pendant les intervalles de temps qui sont prévus respectivement pour la transmission des signaux des éléments détecteurs des N lignes paires (impaires) (L2 . . . L2N) immédiatement suivantes, ces sélections étant exécutées en étant décalées dans le temps par rapport aux transmissions, réalisées pendant ces intervalles de temps, des signaux des éléments détecteurs des N lignes paires (impaires) (L2 . . . L2N), et que les sélections indiquées en dernier lieu sont exécutées pour la lecture et l'élimination des charges produites optiquement, qui se sont accumulées entre-temps dans les éléments détecteurs de la ligne impaire (paire) (L1) considérée auquel cas le temps d'intégration (t$_I$), qui est déterminant pour la lecture immédiatement suivante de la ligne (L1) considérée, commence uniquement au bout de la N-ème élimination des charges produites optiquement entretemps.

10. Procédé suivant la revendication 9, caractérisé par le fait que les sélections de conducteurs de ligne, qui sont nécessaires pour l'élimination des charges produites optiquement entre-temps, sont effectuées par l'intermédiaire des sorties en parallèle du registre à décalage vertical, dont l'entrée des signaux est chargée à cet effet par une suite de N impulsions qui sont séparées par un intervalle de temps qui correspond au double de la durée de la période des impulsions de cadence envoyées au registre à décalage vertical.

11. Procédé suivant la revendication 9, caractérisé par le fait que le nombre N des sélections utilisées pour éliminer les charges est choisi en fonction de l'intensité d'éclairement appliquée au détecteur d'images bidimensionnel, et ce de telle sorte que l'amplitude moyenne du signal du détecteur reste constante.

12. Procédé suivant la revendication 9, caractérisé par le fait qu'on forme la moyenne du signal du détecteur et qu'on utilise l'écart de la valeur moyenne du signal du détecteur par rapport à une valeur de consigne prédéterminée pour sélectionner le nombre N des sélections servant à éliminer les charges, de manière que ledit écart soit aussi faible que possible.

13. Application du détecteur d'images bidimensionnel suivant l'une des revendications 1 à 8 à l'évaluation électonique d'une image projetée sur le plan image d'un appareil de prise de vues électronique, le signal du détecteur obtenu de l'image étant traité pour former un signal vidéo.

# FIG 1

# FIG 2

FIG 3

FIG 4

# FIG 5